# FASCICULE DE BREVET EUROPEEN

(11) **EP 0 953 783 B1**
(45) Date de publication et mention de la délivrance du brevet: **03.09.2003**
(21) Numéro de dépôt: 99400761.5
(22) Date de dépôt: 29.03.1999
(51) Int. Cl.: F16D 23/14

(54) **Butée de débrayage à amortissement de vibration**
Kupplungsausrücklager mit Vibrationsdämpfung
Clutch release bearing with vibration damping

(30) Priorité: 29.04.1998 FR 9805404
(43) Date de publication de la demande: 03.11.1999
(73) Titulaire: SKF FRANCE, F-92140 Clamart (FR)
(72) Inventeur: Ponson, Frédéric, 37230 Luynes (FR); Carter, Michel, Letchworth, Hertfordshire SG6 2SZ (GB)
(74) Mandataire: Casalonga, Axel

(56) Documents cités:
- EP-A- 0 164 947
- FR-A- 1 589 720
- FR-A- 2 230 235
- FR-A- 2 364 364
- FR-A- 2 614 662
- GB-A- 2 006 377
- US-A- 5 630 575

## Description

La présente invention relève du domaine des butées de débrayage.

Une butée de débrayage comporte généralement :
- un palier à roulement se composant d'une bague tournante et d'une bague non tournante entre lesquelles sont disposées des billes régulièrement réparties dans le sens circonférentiel au moyen d'une cage; la bague tournante est munie d'une surface d'attaque destinée à venir en contact avec l'extrémité des doigts composant un diaphragme de l'embrayage;
- un élément de manoeuvre supportant le palier à roulement et qui, sous l'action d'un organe de commande, mécanique, électrique, ou hydraulique, vient déplacer axialement le roulement de butée contre le diaphragme de l'embrayage; l'élément de manoeuvre comporte généralement une portion axiale de forme tubulaire et une portion radiale contre laquelle vient en appui la bague non tournante du roulement de butée;
- des moyens d'auto-alignement, interposés entre la bague non tournante du roulement de butée et l'élément de manoeuvre, lesdits moyens assurant généralement la liaison entre roulement et élément de manoeuvre tout en autorisant un certain déplacement radial du roulement par rapport à l'élément de manoeuvre, ce qui permet au roulement de s'auto-aligner sur le diaphragme d'embrayage lorsque les axes de rotation de ces deux éléments ne sont pas parfaitement alignés au départ.

Lorsque la commande de la butée est mécanique, elle se fait généralement au moyen d'une fourchette de commande métallique dont les deux doigts viennent porter sur une surface d'appui métallique traitée de l'élément de manoeuvre, ledit élément de manoeuvre étant réalisé en matière plastique ou en alliage léger. La fourchette est actionnée par la pédale d'embrayage via une timonerie.

La commande peut également se faire de façon hydraulique au moyen d'un poussoir actionnant l'élément de manoeuvre, le poussoir étant actionné lui-même par la pédale de débrayage et un piston.

Une partie des vibrations et des bruits générés principalement par le moteur et par la boîte de vitesses, est transmise à l'habitacle du véhicule par l'intermédiaire du diaphragme d'embrayage, de la butée et du système de commande de la butée.

On a déjà proposé un dispositif susceptible de filtrer les vibrations entre la butée et la fourchette de commande en position embrayée (FR-A-2 536 482). Toutefois, ce dispositif est inopérant en position débrayée, car la plaque d'appui métallique vient directement en contact avec la collerette radiale de l'élément de manoeuvre d'où une transmission des vibrations. De plus, ce dispositif n'est pas adapté au cas où la collerette radiale de la douille de guidage est métallique.

Le document FR 2230235 propose une butée à amortissement de bruit par l'intermédiaire d'un manchon en caoutchouc coulissant directement sur le tube-guide. Une couche de caoutchouc se trouve disposée axialement entre la bague fixe et la plaque d'appui de la fourchette. Cette solution est spécifique à ce seul type de butée dans lequel l'autocentrage peut s'effectuer par élasticité entre le manchon en caoutchouc et le tube-guide et n'est pas adaptable à des butées avec élément de manoeuvre rigide et manchon d'autocentrage interposé entre le roulement et l'élément de manoeuvre et dans lesquels le manchon doit pouvoir se déplacer radialement par rapport à la portion radiale de l'élément de manoeuvre.

La présente invention a pour objet de remédier à ces problèmes, en proposant un dispositif de butée à amortissement de vibration apte à filtrer en permanence lesdites vibrations et adaptable à différents types de butées à collerette métallique ou non et à différents types d'éléments de manoeuvre.

Le dispositif de butée de débrayage, selon l'invention, est du type comprenant un palier à roulement pourvu d'une bague tournante et d'une bague non tournante, et monté sur un élément de manoeuvre rigide muni d'une partie tubulaire et d'une collerette radiale sur laquelle vient en appui une portion radiale de la bague non tournante. Des moyens d'auto-alignement sont prévus entre la bague non tournante et l'élément de manoeuvre. Le dispositif de butée comprend au moins un organe amortisseur disposé entre la portion radiale de la bague non tournante et la collerette radiale de l'élément de manoeuvre. L'organe amortisseur comprend au moins un élément métallique mince présentant deux faces radiales parallèles opposées, et un revêtement élastique recouvrant au moins une desdites faces et solidaire de l'élément métallique. Dans un encombrement restant faible, cette butée évite la remontée des vibrations du moteur et de la boîte de vitesses vers l'habitacle du véhicule et accroît ainsi le confort d'utilisation et de conduite du véhicule.

Dans un mode de réalisation de l'invention, l'organe amortisseur comporte un élément métallique et un revêtement élastique réalisé sur une face radiale de l'élément métallique.

Dans un autre mode de réalisation de l'invention, l'organe amortisseur comprend un élément métallique dont chaque face radiale est recouverte d'un revêtement élastique.

Dans un autre mode de réalisation de l'invention, l'organe amortisseur comprend deux éléments métalliques munis chacun sur une de leurs faces radiales d'un revêtement élastique commun aux deux éléments métalliques, le revêtement élastique se trouvant en sandwich entre les deux éléments métalliques.

Avantageusement, le revêtement élastique recouvre le bord intérieur de l'élément métallique. Le revêtement élastique peut également recouvrir le bord extérieur de l'élément métallique.

Dans un mode de réalisation de l'invention, l'élément métallique est en contact avec la bague non tournante et le revêtement élastique est en contact avec la collerette radiale.

Dans un autre mode de réalisation de l'invention, l'élément métallique est en contact avec la collerette radiale et le revêtement élastique est en contact avec la bague non tournante.

Le revêtement amortisseur pourra être constitué par un élastomère ou un matériau souple équivalent. En plus de l'amortissement permanent du bruit et des vibrations indépendamment de la position d'embrayage, la butée conforme à l'invention est d'un coût réduit. Ses pièces sont faciles à manipuler et à mettre en place car l'élément métallique confère à l'organe amortisseur une certaine rigidité. Son adaptation sur des butées existantes est facile, sans modification du roulement ni, dans la plupart des cas, de l'élément de manoeuvre.

La présente invention sera mieux comprise et d'autres avantages apparaîtront à la lecture de la description détaillée de quelques modes de réalisation pris à titre d'exemples nullement limitatifs et illustrés sur les dessins annexés, parmi lesquels :
les figures 1 à 3 sont des vues en coupe axiale d'un dispositif de butée de débrayage selon quatre variantes d'un premier mode de réalisation de l'invention; et
les figures 4 et 5 sont des vues en coupe axiale d'un dispositif de butée de débrayage selon deux variantes d'un second mode de réalisation de l'invention.

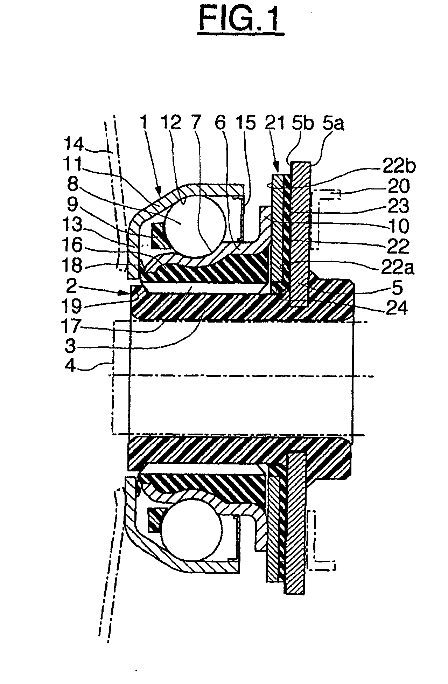

Comme on peut le voir sur les figures 1 à 3, la butée de débrayage conforme à l'invention comprend un palier à roulement 1 monté sur un élément de manoeuvre 2, lequel comporte une portion tubulaire 3 qui peut coulisser par rapport à un tube-guide 4, et une collerette radiale 5.

Le palier à roulement 1 comporte une bague intérieure 6 non tournante à paroi mince, réalisée par emboutissage d'une tôle ou d'un tube présentant un chemin de roulement torique 7, pour une rangée de billes 8 maintenues par une cage 9. La bague intérieure 6 non tournante comporte également une prolongation annulaire dirigée vers l'extérieur sous la forme d'une collerette radiale 10.

Le palier à roulement 1 se complète par une bague extérieure 11 tournante, également à paroi mince, réalisée par emboutissage d'une tôle ou d'un tube, qui présente un chemin de roulement torique 12 pour les billes 8, ainsi qu'une portion radiale 13 qui peut venir en contact avec la surface du diaphragme 14 d'un dispositif d'embrayage lors du déplacement axial de l'ensemble de la butée par rapport au tube-guide 4 sur lequel coulisse l'élément de manoeuvre 2. Le palier à roulement 1 est protégé par un flasque de protection 15 fixé sur la bague extérieure 11.

Un manchon en matière élastique 16, par exemple en élastomère ou en caoutchouc naturel, est disposé à l'intérieur de la bague intérieure 6 et présente une pluralité de nervures 17 parallèles à l'axe de la butée, dirigées vers l'intérieur et dont le bord libre interne entre en contact avec la surface extérieure de la portion cylindrique 3 de l'élément de manoeuvre 2. Le manchon élastique 16 présente une lèvre annulaire 18 qui assure l'étanchéité du palier à roulement 1 en entrant en contact avec la bague extérieure 11. Une nervure annulaire 19, venue de moulage avec l'élément de manoeuvre 2, est disposée à l'extrémité de la portion cylindrique 3 et assure le maintien du palier 1 sur l'élément de manoeuvre 2 avant le montage sur le tube-guide 4.

Comme on le voit plus particulièrement sur la figure 1, la collerette radiale 5 de l'élément de manoeuvre 2 est constituée par une plaque métallique en forme de disque sur laquelle est surmoulée la matière synthétique rigide additionnée de charge minérale ou analogue formant la portion cylindrique 3 de l'élément de manoeuvre 2. Cette plaque métallique réalisée en acier a de préférence subi un traitement thermique de durcissement superficiel et comprend une surface radiale 5a opposée au roulement 1 avec laquelle entre en contact un organe de commande 20, représenté en traits mixtes, qui exerce un effort en direction axiale pour provoquer le déplacement de la butée dans son ensemble par rapport au tube-guide 4 lors d'une opération de débrayage. La collerette radiale 5 comprend également une surface radiale 5b opposée à la surface radiale 5a et située en regard du palier à roulement 1.

Entre la surface radiale 5b de la collerette radiale 5 et la collerette radiale 10 de la bague intérieure 6, est axialement disposé un organe amortisseur 21 qui comprend une plaque métallique 22 plane de forme annulaire pourvue d'une surface radiale 22a du côté opposé au palier à roulement 1 et d'une surface radiale 22b en contact avec la collerette radiale 10 de la bague intérieure 6, et un revêtement élastique 23 disposé entre la face radiale 22a de l'élément métallique 22 et la face radiale 5b de la collerette radiale 5 et solidaire de l'élément métallique 22. Le revêtement élastique 23 peut être réalisé en matériau élastomère ou équivalent. Le revêtement élastique 23 se prolonge radialement vers l'intérieur par un rebord 24 qui recouvre l'alésage de l'élément métallique 22 en le séparant ainsi de la surface cylindrique extérieure de la portion cylindrique 3 de l'élément de manoeuvre 2.

Le rebord 24 ainsi formé par le revêtement élastique empêche la transmission des vibrations par contact radial entre l'élément métallique 22 et la portion cylindrique 3, et permet à l'organe amortisseur 21 de franchir la nervure annulaire 19 lors du montage de l'organe amortisseur 21 sur l'élément de manoeuvre 2 tout en évitant son démontage. Le palier à roulement 1 peut s'autocentrer en se déplaçant radialement par rapport à l'élément de manoeuvre 2, le contact entre la collerette radiale 10 de la bague intérieure 6 et l'élément métallique 22 étant du type métal-métal. La transmission des vibrations en provenance du moteur et de la boîte de vitesses par l'intermédiaire du palier à roulement 1, est filtrée grâce au revêtement élastique 23 et à son rebord 24.

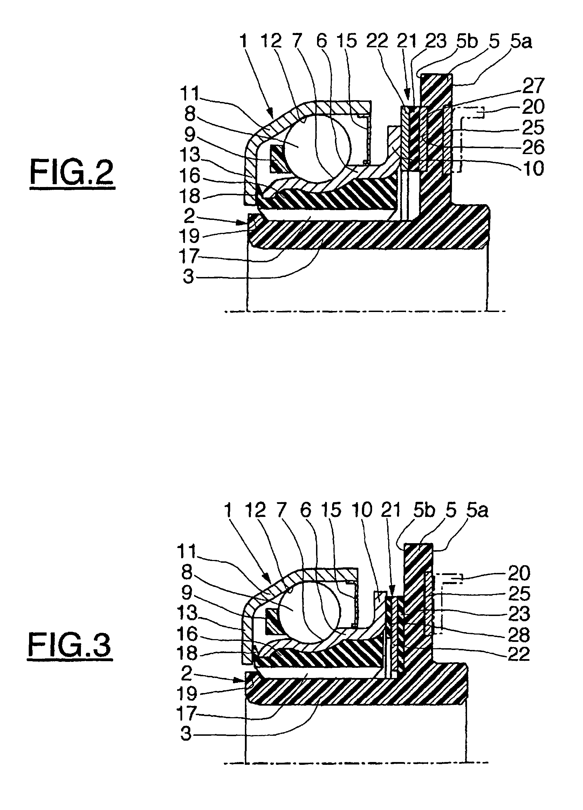

Comme on peut le voir sur la figure 2, l'élément de manoeuvre 2 est entièrement réalisé en matériau synthétique, y compris la collerette radiale 5. La face radiale 5a de la collerette radiale 5 est pourvue d'une plaque métallique d'usure 25 protégeant le matériau synthétique contre le contact avec l'organe de commande 20. La face radiale 5b de la collerette radiale 5 est pourvue d'une rainure annulaire 26 centrée sur l'axe de la butée et de faible profondeur. L'organe amortisseur 21 comprend ici un premier élément métallique 22 en forme de rondelle plane, un revêtement élastique 23 et un second élément métallique 27 identique au premier élément, disposé axialement entre le revêtement élastique 23 et la collerette radiale 5 et radialement dans la rainure 26. Le revêtement élastique 23 se trouve en sandwich entre deux éléments métalliques 22 et 27 et est adhérisé sur ces deux éléments 22 et 27. Là encore, lors de l'autocentrage du roulement, le déplacement radial du palier à roulement 1 par rapport à l'élément de manoeuvre 2 s'effectue grâce au contact entre la collerette radiale 10 de la bague intérieure 6 et le premier élément métallique 22. L'organe amortisseur 21 est maintenu radialement par rapport à l'élément de manoeuvre 2 grâce à la rainure annulaire 26 et ne nécessite pas de s'étendre jusqu'au contact avec la surface cylindrique extérieure de la portion cylindrique 3 de l'élément de manoeuvre 2. Il ne nécessite donc pas non plus de rebord formé par le revêtement élastique, d'où un gain de poids et une économie de matière.

Dans le mode de réalisation illustré sur la figure 3, la collerette radiale 5 est semblable à celle illustrée sur la figure 2 mais est dépourvue de rainure, sa face radiale 5b étant plane. L'organe amortisseur 21 comprend un unique élément métallique 22 en forme de rondelle plane dont la face radiale 22a est en contact avec le revêtement élastique 23, lui-même en contact avec la face radiale 5b. La face radiale 22b de l'élément métallique 22 est en contact avec un revêtement élastique supplémentaire 28, lui-même en contact avec la collerette radiale 10 de la bague intérieure 9. L'élément métallique 22 est ainsi pris en sandwich entre les revêtements élastiques 23 et 28 qui lui sont solidaires. L'alésage de l'élément métallique 22 est supérieur au diamètre extérieur de la portion cylindrique 3 de l'élément de manoeuvre 2, de façon que l'organe amortisseur 21 puisse se déplacer radialement lors de l'auto-alignement de la butée tout en restant en contact avec la face radiale 5b de la collerette radiale 5 de l'élément de manoeuvre 2. L'organe amortisseur 21 dispose ainsi d'un certain jeu radial, tant par rapport au palier à roulement 1 que par rapport à l'élément de manoeuvre 2, et pourra prendre une position radiale intermédiaire entre ces deux pièces.

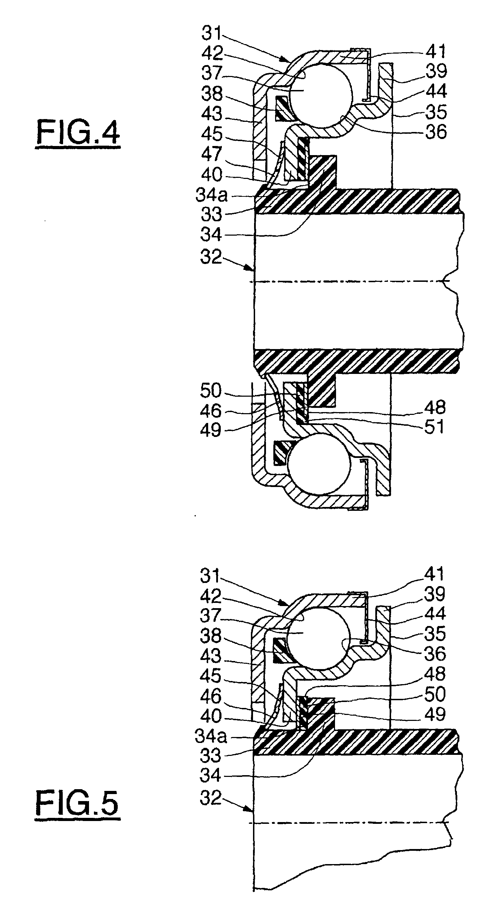

Dans les modes de réalisation des figures 4 et 5, la butée d'embrayage conforme à l'invention comprend un palier à roulement 31 monté sur un organe de manoeuvre 32, avantageusement réalisé en matière synthétique et qui comporte une portion cylindrique 33 et une collerette radiale 34 de faible dimension. Le palier à roulement 31 comporte une bague intérieure non tournante 35 présentant un chemin torique 36 pour une rangée de billes 37 maintenues dans une cage 38. La bague intérieure 35 comporte également une prolongation dirigée vers l'extérieur sous la forme d'une portion radiale 39 et une prolongation dirigée vers l'intérieur sous la forme d'une portion radiale 40 prévue pour exercer un appui avec la surface frontale 34a de la collerette radiale 34.

Le palier à roulement 31 se complète par une bague extérieure tournante 41 présentant un chemin de roulement torique 42 pour les billes 37 ainsi qu'une portion radiale 43 apte à venir en contact avec la surface d'un diaphragme d'embrayage, non représentée. Le palier à roulement 31 est protégé du côté de la portion radiale 39 par un flasque de protection 44 fixé sur la bague extérieure 41.

La collerette radiale 34 est de faible dimension radiale de façon qu'elle soit entourée radialement par la bague intérieure 35 tout en étant située sensiblement dans le même plan radial que les billes 37. La butée d'embrayage ainsi obtenue est très compacte axialement, sa longueur axiale étant égale à celle du palier à roulement 31.

Un organe d'auto-alignement élastique et de retenue axiale de la bague non tournante 35 par rapport à l'organe de manoeuvre 32, référencé 45 dans son ensemble, est disposé autour de la portion cylindrique 33 de l'organe de manoeuvre 32 et axialement entre la portion radiale 40 de la bague intérieure 35 et la portion radiale 43 de la bague extérieure 41. L'organe d'auto-alignement 45 est annulaire et comprend une portion tronconique 46 à partir de laquelle sont issues par découpe une pluralié de languettes élastiques 47 disposées radialement vers l'intérieur et axialement à l'opposé de la collerette radiale 34. Les languettes élastiques 47 sont flexibles axialement et viennent en appui sur une nervure annulaire 48 issue de l'élément de manoeuvre 32, formant une saillie radialement vers l'extérieur et disposée à l'extrémité de la portion cylindrique 33 pour former une butée d'arrêt de l'organe d'auto-alignement 45 sur l'élément de manoeuvre 32 dans le sens axial. L'organe d'auto-alignement élastique 45 est légèrement recourbé de façon à présenter une surface convexe de contact avec la bague intérieure 35 et éviter toute usure excessive au niveau de ce contact.

Un organe amortisseur 48 est disposé axialement entre la portion radiale 40 de la bague intérieure 35 et la surface frontale 34a de la collerette radiale 34 et radialement entre la portion cylindrique 33 et un alésage de la bague intérieure 35. L'organe amortisseur 48 comprend un élément métallique annulaire plan 49 en contact par une de ses faces planes avec la surface frontale 34a et recouvert sur sa face opposée par un revêtement élastique 50. Le revêtement élastique 50 forme un rebord 51 entourant la périphérie de l'élément métallique 49 et empêchant tout contact métal-métal entre ledit élément métallique 49 et la bague intérieure 35. L'organe amortisseur 48 est ainsi solidaire de la bague intérieure 35 et est centré dans un alésage de ladite bague intérieure 35.

Le mode de réalisation de la figure 5 est semblable au précédent, à ceci près que l'organe amortisseur 48 est pourvu d'un élément métallique 49 en contact avec la portion radiale 40 de la bague intérieure 35 et d'un revêtement élastique 50 en contact avec la surface frontale 34a de la collerette radiale 34. L'organe amortisseur 48 est centré par son alésage sur la portion cylindrique 33, la portion radiale 40 de la bague intérieure 35 étant en contact avec et pouvant se déplacer radialement par rapport à l'élément métallique 49.

Un organe amortisseur conforme à l'invention est particulièrement simple à fabriquer, l'élément métallique étant avantageusement réalisé par découpe d'une plaque de tôle. Le revêtement souple amortissant sera ensuite adhérisé d'un côté ou des deux côtés de l'élément métallique par des techniques telles que le moulage ou le dépôt par projection. Dans le cas des organes amortisseurs de forme simple, dans lesquels le contour de l'élément métallique correspond à celui du revêtement souple, on peut obtenir l'organe amortisseur par découpe, à la presse par exemple, d'un feuillard composite multicouches comportant au moins une feuille métallique revêtue sur au moins une de ses faces d'une couche d'un matériau élastique. L'organe amortisseur se présente sous la forme d'une pièce unique à l'état fini. On peut envisager d'utiliser plusieurs organes amortisseurs répartis circonférentiellement entre la bague non tournante de la butée et l'élément de manoeuvre au lieu d'un élément unique annulaire concentrique à la butée.

Grâce à l'invention, on obtient de façon simple et économique une filtration permanente des vibrations, à l'état débrayé et à l'état embrayé, avec pour conséquence une diminution notable du bruit et des vibrations dans l'habitacle du véhicule.

## Revendications

1. Dispositif de butée de débrayage du type comprenant un palier à roulement (1) pourvu d'une bague tournante (11) et d'une bague non tournante (6), et monté sur un élément de manoeuvre rigide (2) muni d'une partie tubulaire (3) et d'une collerette radiale (5) sur laquelle vient en appui une portion radiale (10) de la bague non tournante, et des moyens d'auto-alignement entre la bague non tournante (6) et l'élément de manoeuvre (2),
**caractérisé par le fait qu'**il comprend au moins un organe amortisseur (21) disposé entre la portion radiale (10) de la bague non tournante (6) et la collerette radiale (5) de l'élément de manoeuvre (2), ledit organe amortisseur (21) comprenant au moins un élément métallique mince (22) présentant deux faces radiales parallèles opposées (22a, 22b), et un revêtement élastique (23) recouvrant au moins une des dites faces (22a, 22b) et solidaire du dit élément métallique (22).

2. Dispositif selon la revendication 1, **caractérisé par le fait que** l'organe amortisseur comporte un élément métallique et un revêtement élastique réalisé sur une face radiale de l'élément métallique.

3. Dispositif selon la revendication 1, **caractérisé par le fait que** l'organe amortisseur comprend un élément métallique dont chaque face radiale est recouverte d'un revêtement élastique (23, 28).

4. Dispositif selon la revendication 1, **caractérisé par le fait que** l'organe amortisseur comprend deux éléments métalliques munis chacun sur une des faces radiales d'un revêtement élastique commun aux deux éléments métalliques, le revêtement élastique se trouvant en sandwich entre les deux éléments métalliques.

5. Dispositif selon l'une quelconque des revendications précédentes, **caractérisé par le fait que** le revêtement élastique recouvre le bord intérieur de l'élément métallique.

6. Dispositif selon l'une quelconque des revendications précédentes, **caractérisé par le fait que** le revêtement élastique recouvre le bord extérieur de l'élément métallique.

7. Dispositif selon l'une quelconque des revendications précédentes, **caractérisé par le fait que** l'élément métallique est en contact avec la bague non tournante et le revêtement élastique est en contact avec la collerette radiale.

8. Dispositif selon l'une quelconque des revendications 1 à 5, **caractérisé par le fait que** l'élément métallique est en contact avec la collerette radiale et le revêtement élastique est en contact avec la bague non tournante.

9. Dispositif selon l'une quelconque des revendications précédentes, **caractérisé par le fait que** l'amortissement est assuré indépendamment de la position de l'embrayage.

10. Dispositif selon l'une quelconque des revendications précédentes, **caractérisé par le fait que** l'élément métallique (22) est annulaire.

## Patentansprüche

1. Axiallagervorrichtung zum Auskuppeln vom Typ, welcher ein Wälzlager (1) aufweist, das mit einem drehenden Ring (11) und einem nicht drehenden Ring (6) versehen ist, und welcher an einem festen Betätigungsteil (2) montiert ist, welches mit einem röhrenförmigen Teil (3) und einem radialen Kragen (5) versehen ist, auf welchem sich ein radialer Abschnitt (10) des nicht drehenden Rings abstützt und Selbst-Ausrichtungsmittel zwischen dem nicht drehenden Ring (6) und dem Betätigungsteil (2), **dadurch gekennzeichnet, dass** sie mindestens ein Dämpfungsmittel (21) aufweist, das zwischen dem radialen Abschnitt (10) des nicht drehenden Rings (6) und dem radialen Kragen (5) des Betätigungsteils (2) angeordnet ist, wobei das Dämpfungsmittel (21) mindestens ein metallisches, dünnes Teil (22) aufweist, welches zwei radiale, parallele, gegenüberliegende Flächen (22a, 22b) aufweist und einen elastischen Überzug (23), welcher mindestens eine der Flächen (22a, 22b) überdeckt und mit dem metallischen Teil (22) fest verbunden ist.

2. Vorrichtung nach Anspruch 1, **dadurch gekennzeichnet, dass** das Dämpfungsmittel ein metallisches Teil und einen elastischen Überzug aufweist, welcher auf einer radialen Fläche des metallischen Teils realisiert ist.

3. Vorrichtung nach Anspruch 1, **dadurch gekennzeichnet, dass** das Dämpfungsmittel ein metallisches Teil aufweist, von dem jede radiale Fläche mit einem elastischen Überzug (23, 28) überdeckt ist.

4. Vorrichtung nach Anspruch 1, **dadurch gekennzeichnet, dass** das Dämpfungsmittel zwei metallische Teile umfasst, welche jeweils auf einer der radialen Flächen mit einem elastischen Überzug, der beiden metallischen Teilen gemeinsam ist, versehen ist, wobei der elastische Überzug sich in Sandwich-Form zwischen den zwei metallischen Teilen befindet.

5. Vorrichtung nach irgendeinem der vorherigen Ansprüche, **dadurch gekennzeichnet, dass** der elastische Überzug den inneren Rand des metallischen Teils überdeckt.

6. Vorrichtung nach irgendeinem der vorherigen Ansprüche, **dadurch gekennzeichnet, dass** der elastische Überzug den äußeren Rand des metallischen Teils überdeckt.

7. Vorrichtung nach irgendeinem der vorherigen Ansprüche, **dadurch gekennzeichnet, dass** das metallische Teil in Kontakt mit dem nicht drehenden Ring ist und der elastische Überzug in Kontakt mit dem radialen Kragen ist.

8. Vorrichtung nach irgendeinem der Ansprüche 1 bis 5, **dadurch gekennzeichnet, dass** das metallische Teil in Kontakt mit dem radialen Kragen ist und der elastische Überzug in Kontakt mit dem nicht drehenden Ring ist.

9. Vorrichtung nach irgendeinem der vorherigen Ansprüche, **dadurch gekennzeichnet, dass** die Dämpfung unabhängig von der Position von dem Auskuppeln ist.

10. Vorrichtung nach irgendeinem der vorherigen Ansprüche, **dadurch gekennzeichnet, dass** das metallische Teil (22) ringförmig ist.

## Claims

1. Clutch-release bearing device of the type comprising a rolling-contact bearing (1) with a rotating race (11) and a non-rotating race (6) and mounted on a rigid operating element (2) equipped with a tubular part (3) and a radial flange (5) against which a radial portion (10) of the non-rotating race bears, and with means of self-alignment between the non-rotating race (6) and the operating element (2), **characterized in that** it comprises at least one damping member (21) placed between the radial portion (10) of the non-rotating race (6) and the radial flange (5) of the operating element (2), the said damping member (21) comprising at least one thin metal element (22) which has two opposed parallel radial faces (22a, 22b), and an elastic coating (23) covering at least one of the said faces (22a, 22b) and secured to the said metal element (22).

2. Device according to Claim 1, **characterized in that** the damping member comprises a metal element and an elastic coating made on one radial face of the metal element.

3. Device according to Claim 1, **characterized in that** the damping member comprises a metal element, each radial face of which is covered with an elastic coating (23, 28).

4. Device according to Claim 1, **characterized in that** the damping member comprises two metal elements, each equipped on one of their radial faces with an elastic coating that is common to both metal elements, the elastic coating being sandwiched between the two metal elements.

5. Device according to any one of the preceding claims, **characterized in that** the elastic coating covers the interior edge of the metal element.

6. Device according to any one of the preceding claims, **characterized in that** the elastic coating covers the exterior edge of the metal element.

7. Device according to any one of the preceding claims, **characterized in that** the metal element is in contact with the non-rotating race and the elastic coating is in contact with the radial flange.

8. Device according to any one of Claims 1 to 5, **characterized in that** the metal element is in contact with the radial flange and the elastic coating is in contact with the non-rotating race.

9. Device according to any one of the preceding claims, **characterized in that** the damping is provided independently of the position of the clutch.

10. Device according to any one of the preceding claims, **characterized in that** the metal element (22) is annular.
